**Europäisches Patentamt**

**European Patent Office**

**Office européen des brevets**

(11) Veröffentlichungsnummer: **0 253 795**
**B1**

(12) **EUROPÄISCHE PATENTSCHRIFT**

(45) Veröffentlichungstag der Patentschrift:
26.04.89

(51) Int. Cl.⁴: **F16B 13/14, E04F 13/08**

(21) Anmeldenummer: **87890125.5**

(22) Anmeldetag: **04.06.87**

(54) Anker.

(30) Priorität: **16.06.86  AT 1623/86**

(43) Veröffentlichungstag der Anmeldung:
**20.01.88 Patentblatt 88/3**

(45) Bekanntmachung des Hinweises auf die Patenterteilung:
**26.04.89 Patentblatt 89/17**

(84) Benannte Vertragsstaaten:
**BE CH DE ES FR GB GR IT LI LU NL SE**

(56) Entgegenhaltungen:
**DE-A- 3 014 569**
**DE-A- 3 444 801**
**US-A- 1 958 674**

(73) Patentinhaber: **Pointner, Ferdinand,**
**Tagwerkerstrasse 34, A-4810 Gmunden(AT)**

(72) Erfinder: **Pointner, Ferdinand, Tagwerkerstrasse 34,**
**A-4810 Gmunden(AT)**

(74) Vertreter: **Hübscher, Heiner, Dipl.-Ing. et al,**
**Patentanwälte Dipl.-Ing. Gerhard Hübscher, Dipl.-Ing.**
**Helmut Hübscher Dipl.-Ing. Heiner Hübscher**
**Spittelwiese 7, A-4020 Linz(AT)**

ACTORUM AG

## Beschreibung

Die Erfindung bezieht sich auf einen Anker für Plattenverkleidungen, insbesondere Steinplattenverkleidungen von Fassaden od. dgl., bestehend aus einem Ankerbolzen, der mit einem Ende in Bohrlöcher des Mauerwerkes einsteckbar und einmörtelbar ist und an seinem anderen Ende einen querverlaufenden Dorn zum Eingreifen in stirnseitige Bohrungen der Verkleidungsplatten aufweist (DE-A 3 444 801).

Solche Anker dienen zur Fixierung der einzelnen Verkleidungsplatten in einer gegenüber der zu verkleidenden Wand od. dgl. genau festgelegten Lage, wozu bisher die aus geraden, zur Versteifung gegebenenfalls verwundenen oder profilierten Metallbolzen bestehenden Anker zum Ausrichten der einzelnen Platten jeweils mehr oder weniger tief im Mauerwerk dieser Wand einzumörteln sind. Dabei kommt es beim Plattenverlegen, um Verzögerungen zu vermeiden, auf ein möglichst schnelles Setzen der Anker an, so daß mit schnell abbindendem Zementmörtel gearbeitet werden muß oder die Anker durch Einschlagen zusätzlicher Metallstifte unterstützt werden müssen. Das Setzen der bekannten Anker ist daher recht zeitaufwendig und umständlich und erfordert außerdem teures Mörtelmaterial oder zusätzliche Befestigungsmittel.

Der Erfindung liegt somit die Aufgabe zugrunde, diese Mängel zu beseitigen und einen Anker der eingangs geschilderten Art zu schaffen, der sich schnell und geschickt einmörteln läßt und ein genaues und rationelles Verlegen von Verkleidungsplatten erlaubt.

Die Erfindung löst diese Aufgabe dadurch, daß der Ankerbolzen an seinem Einsteckende eine zylindrische Verdickung mit geprägter oder geriffelter Oberfläche besitzt und im Bereich zwischen Dorn und Verdickung eine verschiebbare Treibhülse mit gezahnter oder lamellierter Außenseite trägt, wobei der Außendurchmesser der Treibhülse größer als der der Verdickung ist. Zum Setzen dieses Ankers wird das Bohrloch teilweise mit Zementmörtel gefüllt und dann der Anker mit Hilfe der Treibhülse so weit eingeschlagen, wie es die ordnungsgemäße Lage der Verkleidungsplatten erfordert. Die Treibhülse verkrallt sich auf Grund ihres vergrößerten Außendurchmessers und ihrer profilierten Außenseite beim Einschlagen im Bohrloch und bietet dem Anker zusammen mit der in der Bohrung steckenden Verdickung eine sichere Abstützung, die ein sofortiges Montieren der Platten erlaubt. Der durch die Verdickung verdrängte Zementmörtel füllt das Bohrloch zumindest im Endbereich vollständig aus, so daß nur mehr die vordere Öffnung mit Mörtel verschlossen zu werden braucht, und der Anker ist gesetzt. Wegen der Abstützung des Ankers durch die Treibhülse behindert die Abbindezeit des Zementmörtels die Verlegearbeiten nicht, und es kann beliebiger Zementmörtel verwendet werden. Nach dem Abbinden des Mörtels ist der Anker wie bisher fest im Bohrloch eingemauert, wobei die im Zementmörtel eingebettete Verdickung einen besonders festen und sicheren Sitz des Ankers gewährleistet.

Nach einer besonders vorteilhaften Ausgestaltung der Erfindung ist die Treibhülse aus Kunststoff hergestellt und durchgehend längsgeschlitzt. Diese Treibhülsen lassen sich billig und aufwandsarm fertigen und brauchen erst kurz vor dem Setzen des Ankers auf dem Bolzen aufgeklipst zu werden. Wegen ihrer federelastischen Eigenschaften sind sie ohne Schwierigkeiten in das Bohrloch einzuschlagen und führen dennoch zu einem sicheren Halt für den Anker bis zum Abbinden des Zementmörtels.

Besteht erfindungsgemäß die Verdickung aus einer am Ankerbolzen aufgepreßten oder angeschweißten Metallhülse, kommt es auch für den Ankerbolzen zu einer rationellen Herstellung, wobei die Metallhülse mit einer entsprechend griffigen Oberfläche ausgestattet werden kann und die Anker durch Wahl des Hülsendurchmessers an unterschiedliche Bohrlochdimensionen anpaßbar sind.

In der Zeichnung ist der Erfindungsgegenstand rein schematisch veranschaulicht, und zwar zeigen

Fig. 1 und 2 zwei Ausführungsbeispiele eines erfindungsgemäßen Ankers in teilgeschnittener Ansicht,

Fig. 3 einen zur Fixierung von Verkleidungsplatten in ein Mauerwerk eingesetzten Anker im Schnitt und

Fig. 4 eine Treibhülse für einen erfindungsgemäßen Anker in Stirnansicht.

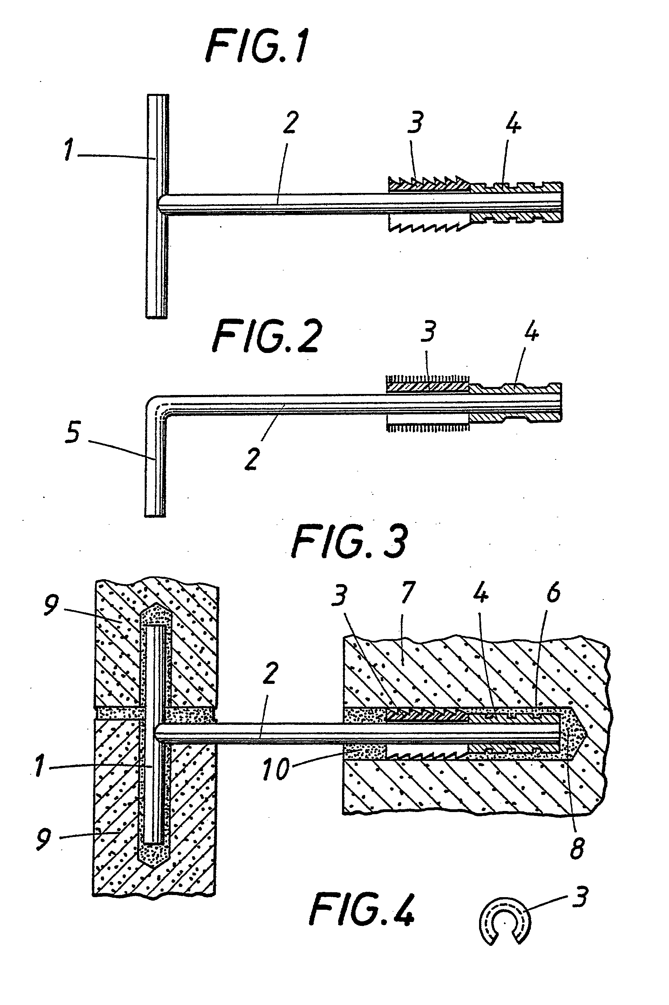

Um Plattenverkleidungen rationell verlegen zu können, sind Anker vorgesehen, die, wie in Fig. 1 angedeutet, aus einem metallenen Ankerbolzen 2 bestehen, der an seinem einen Ende einen angeschweißten Dorn 1 und an seinem anderen Ende eine zylindrische Verdickung 4 aus einer aufgepreßten oder aufgeschweißten, oberflächig geriffelten Metallhülse aufweist. Im Bereich zwischen Dorn 1 und Verdickung 4 trägt der Ankerbolzen 2 eine verschiebbare Treibhülse 3 mit gezahnter Außenseite, deren Außendurchmesser größer als der der Verdickung 4 ist.

Gemäß dem Ausführungsbeispiel nach Fig. 2 bildet der Ankerbolzen 2 mit einer endseitigen Abwinkelung 5 einen Dorn, die Treibhülse 3 besitzt eine lamellierte Außenseite und eine Metallhülse mit geprägter Oberfläche dient als Verdickung 4.

Wie aus Fig. 4 hervorgeht, ist die aus Kunststoff hergestellte Treibhülse 3 durchgehend längsgeschlitzt, so daß sie sich jederzeit auf den Ankerbolzen 2 aufklipsen läßt und gut verschiebbar bleibt.

Zum Verlegen von Plattenverkleidungen, beispielsweise aus Steinplatten 9, werden, wie in Fig. 3 angedeutet, die Ankerbolzen 2 entsprechend tief in ein Bohrloch 6 des zu verkleidenden Mauerwerkes 7 eingemörtelt, wodurch sie mit ihren in stirnseitige Bohrungen der Verkleidungsplatten 9 eingreifenden Dornen 1 die Steinplatten 9 in einer genau ausgerichteten Lage fixieren können. Zum Setzen der Anker wird das Bohrloch 6 zuerst teilweise mit Zementmörtel 8 gefüllt und dann der Ankerbolzen 2 mit seiner Verdickung 4 voran in das Bohrloch 6 eingeführt. Durch Einschlagen der Treibhülse 3 mittels eines entsprechenden Werkzeuges, beispielsweise eines hülsenförmigen Schlageisens, läßt sich der Ankerbolzen 2 problemlos bis zur gewünschten Tiefe in das Bohrloch eintreiben, da sich die Treibhülse 3 an der Verdickung 4 abstützt und dadurch der Ankerbolzen 2 durch Einschlagen der Treibhülse 3 mitgenommen wird. Die Treibhülse 3 ist im Durchmesser größer als das Bohrloch 6 und kann sich auf Grund ihrer gezahnten oder lamellierten Außenseite im Bohrloch 6 verkrallen, so daß der Ankerbolzen 2 allein durch das Einschlagen der Treibhülse 3 in der gewünschten Lage fixiert ist. Nun braucht das Bohrloch 6 nur mehr außen mit Zementmörtel 10 verschlossen zu werden und der gesetzte Anker ist sofort zur ordnungsgemäßen Halterung der Steinplatten 9 bereit. Die im Bohrloch 6 festsitzende Treibhülse 3 gibt nämlich dem Anker bis zum eigentlichen Abbinden des Zementmörtels 8, 10 eine ausreichende Abstützung, so daß der Anker beim Plattenverlegen ohne Wartezeit für das Mörtelabbinden verwendet werden kann. Auf Grund der Verdickung 4 und deren geriffelten oder geprägten Oberfläche kommt es dann nach dem Erhärten des Mörtels 8, 10 unabhängig von der Treibhülse 3 zu einem sicheren, hochfesten Sitz des Ankers im Mauerwerk 7.

## Patentansprüche

1. Anker für Plattenverkleidungen, insbesondere Steinplattenverkleidungen von Fassaden od. dgl., bestehend aus einem Ankerbolzen (2), der mit einem Ende in Bohrlöcher (6) des Mauerwerkes (7) einsteckbar und einmörtelbar ist und an seinem anderen Ende einen querverlaufenden Dorn (1) zum Eingreifen in stirnseitige Bohrungen der Verkleidungsplatten (9) aufweist, dadurch gekennzeichnet, daß der Ankerbolzen (2) an seinem Einsteckende eine zylindrische Verdickung (4) mit geprägter oder geriffelter Oberfläche besitzt und im Bereich zwischen Dorn (1) und Verdickung (4) eine verschiebbare Treibhülse (3) mit gezahnter oder lamellierter Außenseite trägt, wobei der Außendurchmesser der Treibhülse (3) größer als der der Verdickung (4) ist.

2. Anker nach Anspruch 1, dadurch gekennzeichnet, daß die Treibhülse (3) aus Kunststoff hergestellt und durchgehend längsgeschlitzt ist.

3. Anker nach Anspruch 1 oder 2, dadurch gekennzeichnet, daß die Verdickung (4) aus einer am Ankerbolzen (2) aufgepreßten oder angeschweißten Metallhülse besteht.

## Claims

1. An anchor for tile facings, particularly for stone tile facings of facades or the like, consisting of an anchor bolt (2), which with at one end is adapted to be inserted into boreholes (6) of the masonry (7) and to be fixed therein with mortar and at its other end is provided with a transversely extending mandrel (1) to be received in bores in the end faces of the facing tiles (9), characterized in that the anchor bolt (2) has at its insertable end a cylindrical enlarged portion (4) with an embossed or fluted surface and in the region between the mandrel (1) and the enlarged portion (4) carries a slidable driving sleeve (3), which has a serrated or finned outside surface, and the driving sleeve (3) is larger in outside diameter than the enlarged portion (4).

2. An anchor according to claim 1, characterized in that the driving sleeve (3) is made of plastics and formed with a slit extending throughout its length.

3. An anchor according to claim 1 or 2, characterized in that the enlarged portion (4) consists of a metal sleeve, which has been pressed onto or welded to the anchor bolt (2).

## Revendications

1. Ancre pour revêtements en dalles, notamment revêtements en dalles de pierre de façades ou constructions semblables, consistant en un boulon d'ancrage (2) qui peut être engagé dans des trous de perçage (6) de la maçonnerie (7) et peut être fixé avec du mortier, qui possède en son autre extrémité un mandrin (1) s'étendant transversalement qui s'engage dans des perçages pratiqués dans la face avant des dalles de revêtement (9), caractérisée en ce que le boulon d'ancrage (2) possède du côté de son extrémité à insérer un épaississement cylindrique (4) avec une surface gravée ou cannelée et dans la zone entre le mandrin (1) et l'épaississement (4) une douille de propulsion (3) pouvant être déplacée et possédant un côté extérieur denté ou à la manière de lamelles, le diamètre extérieur de la douille de propulsion (3) étant supérieur à l'épaississement (4).

2. Ancre selon la revendication 1, caractérisée en ce que la douille de propulsion (3) est fabriquée en plastique et possède une fente longitudinale traversante.

3. Ancre selon les revendications 1 ou 2, caractérisée en ce que l'épaississement (4) consiste en une douille de métal pressé ou soudé sur le boulon d'ancrage (2).

# FIG.1

# FIG.2

# FIG.3

# FIG.4